# EUROPEAN PATENT SPECIFICATION

(11) **EP 3 672 468 B1**
(45) Date of publication and mention of the grant of the patent: **28.02.2024**
(21) Application number: 18743515.1
(22) Date of filing: 20.07.2018
(51) Int. Cl.: A47L 15/42

(54) **A DISHWASHER COMPRISING A HEAT PUMP**
GESCHIRRSPÜLER MIT EINER WÄRMEPUMPE
LAVE-VAISSELLE COMPRENANT UNE POMPE À CHALEUR

(30) Priority: 23.08.2017 TR 201712563
(43) Date of publication of application: 01.07.2020
(73) Proprietor: Arçelik Anonim Sirketi, 34445 Istanbul (TR)
(72) Inventor: POYRAZ, Onur, 34950 Istanbul (TR); SAGLICAN, Emre, 34950 Istanbul (TR); KUTUK, Erkan, 34950 Istanbul (TR); GOKDERE, Nurgul, 34950 Istanbul (TR); CALISKAN, Huseyin, 34950 Istanbul (TR)
(86) International application number: PCT/EP2018/069812
(87) International publication number: WO 2019/037979

(56) References cited:
- EP-A2- 2 682 037
- WO-A1-2016/004990
- US-A1- 2014 238 442

## Description

The present invention relates to a dishwasher comprising a heat pump.

In dishwashers, heat pumps are used for decreasing the energy consumption and improve the drying performance. In heat pump dishwashers, the heat pump is composed of elements such as the compressor, the condenser, the throttle element and the evaporator. The components of the heat pump are connected via a pipe line and the heat transfer is provided by means of the cycle fluid in the line. The condenser is a tube bundle that has a hot surface and enables the washing water used in the washing process to be heated. The evaporator has a cold surface and is positioned so as to contact the ambient air. The evaporator absorbs heat from the environment and provides heat transfer to the condenser. The refrigerant pumped by the compressor enables the surfaces of the evaporator to be cooled to 5 degrees centigrade and the ambient air at room temperature transfers a portion of its heat to the evaporator due to the temperature difference. The heat pump efficiency that can be obtained with the evaporator at around 20 degrees centigrade decreases in colder weather conditions and the heating durations increase, causing user dissatisfaction. Increasing the heat transfer rate by unit time of the evaporator from the environment is a desirable feature of an ideal dishwasher.

In the state of the art European Patent Application No. EP2682037, a dishwasher is disclosed, wherein the water condensing on the heat pump is transferred to the washing cycle.

In the state of the art International Patent Application No. WO2016004990, a dishwasher is disclosed, wherein the water condensing on the heat pump is transferred to the washing cycle. In the state of the art European Patent No. EP2777474, also known as US2014/0238442 a dishwasher is disclosed, wherein the water condensing on the heat pump is transferred to the washing cycle.

The aim of the present invention is the realization of a dishwasher wherein the heat pump efficiency is increased.

The dishwasher realized in order to attain the aim of the present invention, explicated in the first claim and the respective claims thereof comprises at least one nozzle for spraying water to the surroundings of the evaporator, which is one of the components of the heat pump that is used for heating the washing water, in order to increase the humidity of the air around the evaporator, and a control unit that enables the water to be sprayed through the nozzles for the operation of the evaporator. The ambient humidity is increased by spraying water to the surroundings of the evaporator. The condensation of the humidity, namely the water vapor on the evaporator provides that a significantly higher amount of heat is transferred to the evaporator than the heat transferred between the air at room temperature and the cooler evaporator surfaces. Thus, the efficiency of the heat pump is increased.

In an embodiment of the present invention, the water to be supplied to the nozzles is provided from the water that condenses on the evaporator and accumulates in a first collection container. The water that condenses on the evaporator is delivered to the nozzles and sprayed to the surroundings of the evaporator preferably in the subsequent washing cycle.

In the present invention, the water to be supplied to the nozzles is provided from the water that condenses during the drying cycle and accumulates in a second collection container. As in the embodiment disclosed above, the water consumption of the washing machine is prevented from further increasing by using the water provided by the condensation of the humidity in the ambient air for increasing the humidity of the air around the evaporator.

In another embodiment of the present invention, the water to be supplied to the nozzles is provided from the water mains. In another version of this embodiment, the mains water is first passed through a salt container used for softening the water to be softened and then transferred to the nozzles. Thus, the nozzles are prevented from clogging due to limescale and the efficiency of the heat pump is prevented from decreasing due to the calcification of the evaporator surfaces.

In another embodiment of the present invention, the water used in the rinsing process is used as the water to be transferred to the nozzles. The water used in the rinsing process is collected in a receptacle and, preferably in the subsequent cycle, transferred to the nozzles so as to be sprayed to the surroundings of the evaporator.

In another embodiment of the present invention, the water that is sprayed to the surroundings of the evaporator is pumped to the nozzles by means of a pump that pumps water to the washing tub wherein the washing process is realized. A valve arranged between the pump and the nozzles is controlled and opened by the control unit, and the water pumped by the pump is transferred to the nozzles.

In another embodiment of the present invention, the water to be transferred to the nozzles preferably flows to the nozzles from a receptacle located at a level above the nozzles with the effect of the gravity. With the combination of this embodiment with the above-disclosed embodiments, the humidity in the air around the evaporator is increased almost without consuming energy.

In another embodiment of the present invention, a fan is used for circulating the air around the evaporator. The fan continuously blows air towards the evaporator during the operation of the evaporator. In a version of this embodiment, the nozzles are positioned so as to spray water to the gap between the evaporator and the fan, and the air flow increases the evaporation rate of the water sprayed through the nozzles. In another version of this embodiment, the nozzles spray the water to the air suction side of the fan, the water is enabled to pass through the fan and evaporate as smaller droplets, and air with a higher humidity level is blown towards the evaporator. In another version of this embodiment, the nozzles spray the water directly onto the evaporator, and the evaporator is enabled to absorb heat from the sprayed water in addition to absorbing heat from the humidity.

In another embodiment of the present invention, the water to be transferred to the nozzles is first kept in a heating container around the compressor for a while and heated. Thus, the evaporation rate of the water when sprayed from the nozzles is increased by increasing the temperature of the water, and the water that does not evaporate is enabled to transfer an increased amount of heat to the evaporator.

By means of the dishwasher of the present invention, the amount energy consumed during the heating of the washing water is decreased by increasing the efficiency of the heat pump and the water is enabled to be heated quicker.

A dishwasher realized in order to attain the aim of the present invention is illustrated in the attached figures, where:

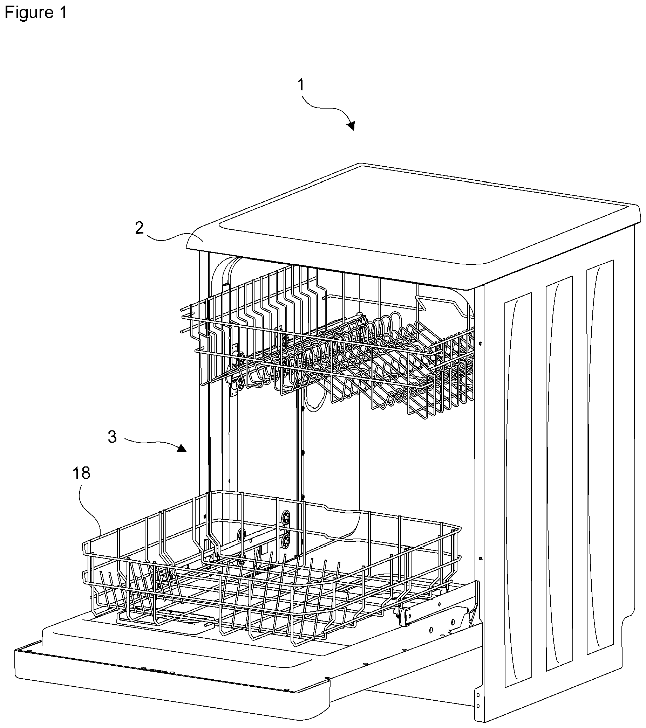

Figure 1 - is the perspective view of the dishwasher.

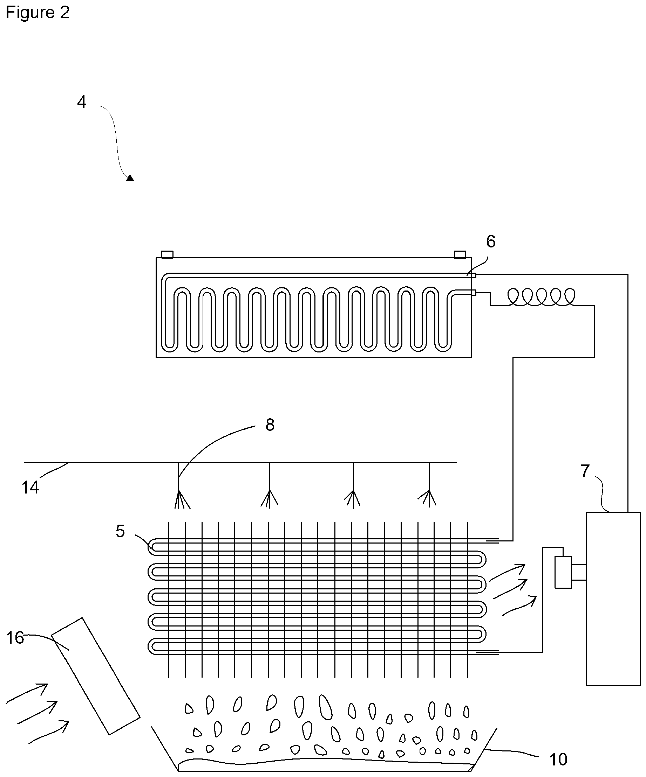

Figure 2 - is the schematic view of the heat pump.

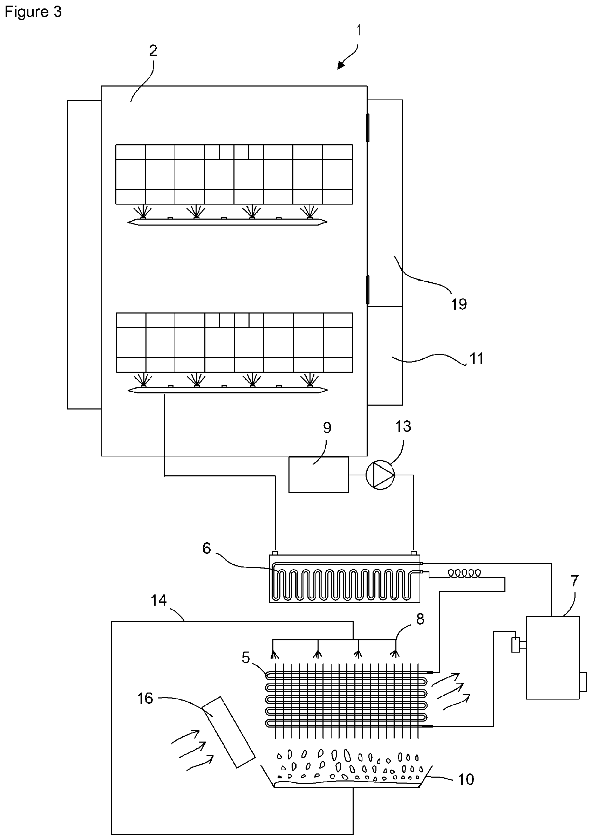

Figure 3 - is the schematic view of an embodiment of the present invention.

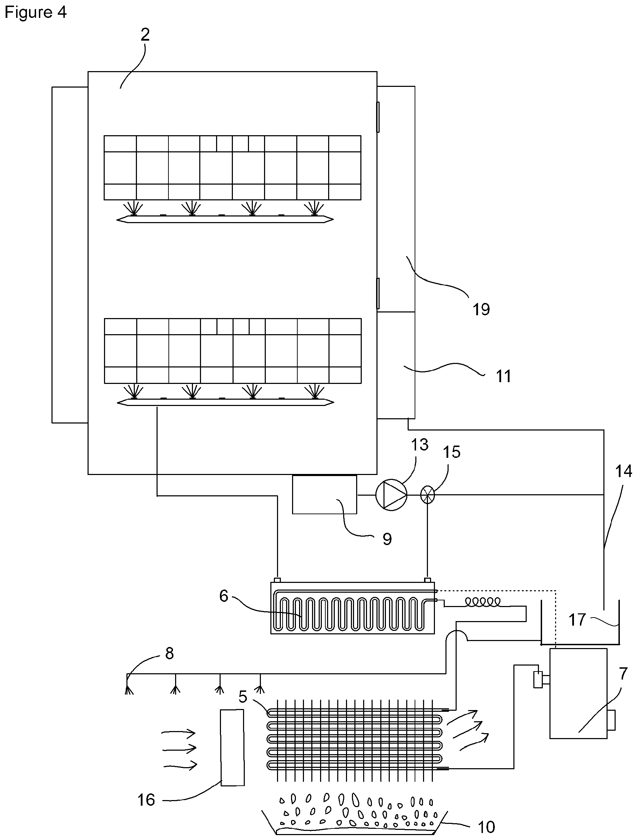

Figure 4 - is the schematic view of another embodiment of the present invention.

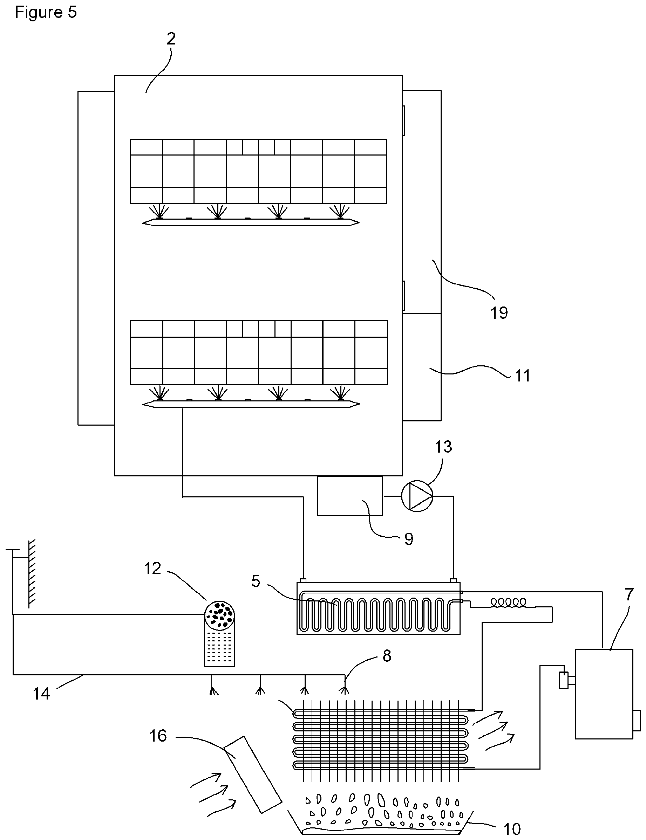

Figure 5 - is the schematic view of an embodiment of the present invention wherein the mains water is used.

The elements in the figures are numbered as follows:
1- Dishwasher
2- Body
3- Washing tub
4- Heat pump
5- Evaporator
6- Condenser
7- Compressor
8- Nozzle
9- Control unit
10- First collection container
11- Second collection container
12- Salt container
13- Pump
14- Water conduit
15- Valve
16-Fan
17- Heating container
18-Rack
19- Drying duct

The dishwasher (1) comprises a body (2); a washing tub (3) that is disposed in the body (2) and wherein the washing process is performed; and a heat pump (4) that is disposed in the body (2) and that has at least one evaporator (5) for absorbing the ambient heat by forming a cold surface, a condenser (6) that enables the washing water to be heated by creating a hot surface using the heat absorbed from the evaporator (5) and a compressor (7) that is in fluid communication with the evaporator (5) and the condenser (6) and that performs the refrigerant cycle. In the dishwasher (1), the surface of the evaporator (5) is cooled by means of the heat pump (4), and the evaporator (5) is enabled to draw thermal energy from the environment. The thermal energy drawn from the environment is transferred to the condenser (6) and the water to be used in the washing cycle is heated. The dishwasher (1) further comprises at least one rack (18) that is arranged in the washing tub (3) and whereon the dishes are placed.

The dishwasher (1) of the present invention comprises at least one nozzle (8) that enables the water to be sprayed to the surroundings of the evaporator (5) to increase the humidity of the air around the evaporator (5), and a control unit (9) that enables the water to be sprayed through the nozzle (8) during the operation of the evaporator (5).

In the dishwasher (1) of the present invention, the nozzles (8) are provided around the evaporator (5). The control unit (9) enables the water to be sprayed around the evaporator (5) by means of the nozzles (8) during the operation of the evaporator (5). The nozzles (8) spray the water in very tiny droplets, in other words, as pulverized and some of the water droplets that mix into the air evaporate and increase the ambient humidity. As the ambient humidity increases, the amount of condensation on the evaporator (5) increases, and since the condensation coefficient is much larger than the heat transfer coefficient, the amount of thermal energy drawn from the environment increases.

In an embodiment of the present invention, the dishwasher (1) comprises a first collection container (10) wherein the water that condenses on the evaporator (5) is collected, and the control unit (9) enables the water collected in the first collection container (10) to be sprayed by the nozzles (8). In this embodiment, the first collection container (10) wherein the water droplets that condense on the evaporator (5) and flow down with the effect of the gravity are collected functions also as a source for the nozzles (8) that enable the ambient humidity to be increased. Preferably, the water that condenses on the evaporator (5) in a washing cycle is transferred to the nozzles (8) in the subsequent washing cycle and the efficiency of the heat pump (4) is increased. The condensed water is enabled to be heated by being used in the subsequent cycle, and evaporates more easily when sprayed through the nozzles (8).

In an embodiment of the present invention, the dishwasher (1) comprises a second collection container (11) wherein the water that condenses in the drying step is collected, and the control unit (9) enables the water collected in the second collection container (11) to be sprayed by the nozzles (8). In this embodiment, which is a different version of the above-disclosed embodiment, the hot and humid air that rises from the dishes condenses preferably in a drying duct (19) and is collected in the second collection container (11). The collected water is transferred to the nozzles (8) in the subsequent washing cycle and sprayed to the surroundings of the evaporator (5). In parallel with the embodiment above, in both embodiments, water saving is provided by eliminating the need for using water from the water mains to increase the humidity around the evaporator (5).

In another embodiment of the present invention, the control unit (9) enables the mains water to be sprayed through the nozzles (8). In this embodiment, in a dishwasher (1) wherein the first and second collection containers (10, 11) are not available contrary to the above-disclosed embodiment, the control unit (9) enables the mains water to be transferred to the nozzles (8) and enables the efficiency of the heat pump (4) to be increased.

In another embodiment of the present invention, the dishwasher (1) comprises a salt container (12) that enables the mains water to be softened, and the control unit (9) enables the mains water to be passed first through the salt container (12) before being sprayed through the nozzles (8). In a version of the embodiment wherein the nozzles (8) are supplied with the mains water, the water is softened by being first passed through the salt container (12) and thus, the evaporation ratio of the water sprayed through the nozzles (8) is increased. Furthermore, formation of limescale on the nozzles (8) and the evaporator (5) is prevented by using soft water.

In another embodiment of the present invention, the control unit (9) enables especially the water used in the rinsing process to be sprayed through the nozzles (8) in the washing process. In this embodiment, preferably, the water used in the rinsing process of the previous washing process is used as the source for the water to be supplied to the nozzles (8). By means of this embodiment, the mains water is not used to increase the humidity of the air around the evaporator (5) and water saving is provided.

In another embodiment of the present invention, the dishwasher (1) comprises a pump (13) that enables the mains water to be transferred to the washing tub (3); a water conduit (14) that passes through the pump (13) and enables the water to be supplied to the nozzles (8), and a valve (15) that is disposed on the water conduit (14), and the control unit (9) enables the water to be supplied to the nozzles (8) by controlling the valve (15) and the pump (13). The pump (13) enables the mains water to be transferred into the washing tub (3). The water is enabled to reach the nozzles (8) by opening and closing the valve (15). In this embodiment, the control unit (9) controls the pump (13) and the valve (15) in the dishwasher (1) so as to enable the water to be transferred to the nozzles (8). By means of this embodiment, the existing pump (13) is used for transferring the water to the nozzles (8) and the need for using an additional pump is obviated.

In another embodiment of the present invention, the water in the water conduit (14) is enabled to be transferred to the nozzles (8) with the effect of gravity. In this embodiment, contrary to the above-disclosed embodiment, a pump (13) or any other mechanical/electronic element is not used for transferring water to the nozzles (8), and the water to be transferred to the nozzles (8) is enabled to flow towards the nozzles (8) preferably with the effect of gravity from a receptacle that is disposed at a higher position.

In another embodiment of the present invention, the dishwasher (1) comprises at least one fan (16) that enables the ambient air to be blown onto the evaporator (5). In this embodiment, by enabling the air to be blown onto the evaporator (5) by means of the fan (16), the amount of heat transferred by unit time from the environment by the evaporator (5) is increased.

In another embodiment of the present invention, the nozzles (8) are positioned between the evaporator (5) and the fan (16). As the nozzles (8) spray water at a position between the evaporator (5) and the fan (16), the water flows into the air flow towards the evaporator (5) generated by the fan (16). Thus, evaporation rate of the water sprayed increases and a larger portion of the water evaporates, increasing the ambient humidity.

In another embodiment of the present invention, the nozzles (8) are positioned at the air inlet of the fan (16). In this embodiment, by spraying the water towards the air inlet of the fan (16), the water droplets are enabled to turn into smaller droplets by hitting the blades of the fan (16) and thus, the evaporation rate is increased.

In another embodiment of the present invention, the nozzles (8) are positioned above the evaporator (5). In this embodiment, by enabling the water to be sprayed directly onto the evaporator (5), the evaporator (5) is allowed to draw heat from the water that is not evaporated.

In another embodiment of the present invention, the dishwasher (1) comprises a heating container (17) that is arranged around the compressor (7) and that enables the water to be supplied to the nozzles (8) to be heated. The water to be sprayed to the surroundings of the evaporator (5) is enabled to be heated by means of the heat emitted from the compressor (7) without the need for consuming additional energy. Thus, the efficiency of the heat pump (4) is increased and the excess heat around the compressor (7) is dissipated.

By spraying water to the surroundings of the evaporator (5) of the present invention by means of the nozzles (8), the humidity and the temperature of the air surrounding the evaporator (5) are increased and thus, the efficiency of the heat pump (4) is improved. Thus, the energy consumed in the dish washing and drying processes is decreased. The water to be used in the washing process is enabled to be heated more quickly by increasing the efficiency of the heat pump (4). As disclosed in the other embodiments of the invention, by using the water that condensates on the evaporator (5) or the water that condensates in the drying process as the source of the water supplied to the nozzles (8), the need for consuming water in addition to the washing water is eliminated.

## Claims

1. A dishwasher (1) **comprising** a body (2); a washing tub (3) that is disposed in the body (2) and wherein the washing process is performed; and a heat pump (4) that is disposed in the body (2) and that has at least one evaporator (5) for absorbing the ambient heat by forming a cold surface, a condenser (6) that enables the washing water to be heated by creating a hot surface using the heat absorbed from the evaporator (5) and a compressor (7) that is in fluid communication with the evaporator (5) and the condenser (6) and that performs the refrigerant cycle, at least one nozzle (8) that enables water to be sprayed to the surroundings of the evaporator (5) to increase the humidity of the air around the evaporator (5), and a control unit (9) that enables the water to be sprayed through the nozzle (8) during the operation of the evaporator (5) **characterized by** a second collection container (11) wherein the water that condenses during the drying process is collected and by the control unit (9) that enables the water collected in the second collection container (11) to be sprayed by the nozzles (8).

2. A dishwasher (1) as in Claim 1, **characterized by** a pump (13) that enables the mains water to be transferred to the washing tub (3); a water conduit (14) that passes through the pump (13) and enables the water to be supplied to the nozzles (8), and a valve (15) that is disposed on the water conduit (14), and the control unit (9) that enables the water to be supplied to the nozzles (8) by controlling the valve (15) and the pump (13).

3. A dishwasher (1) as in any one of the above claims, **characterized by** at least one fan (16) that enables the ambient air to be blown onto the evaporator (5).

4. A dishwasher (1) as in Claim 3, **characterized by** the nozzles (8) that are positioned between the evaporator (5) and the fan (16).

5. A dishwasher (1) as in Claim 3, **characterized by** the nozzles (8) that are positioned at the air inlet of the fan (16).

6. A dishwasher (1) as in any one of the above claims, **characterized by** the nozzles (8) that are positioned above the evaporator (5).

7. A dishwasher (1) as in any one of the above claims, **characterized by** a heating container (17) that is arranged around the compressor (7) and that enables the water supplied to the nozzles (8) to be heated.

## Patentansprüche

1. Eine Geschirrspülmaschine (1) **umfasst** einen Körper (2); eine Waschwanne (3), die im Körper (2) angeordnet ist und in der der Waschvorgang durchgeführt wird; und eine im Körper (2) angeordnete Wärmepumpe (4), die mindestens einen Verdampfer (5) zur Aufnahme der Umgebungswärme unter Bildung einer kalten Oberfläche aufweist, einen Kondensator (6), der die Erwärmung des Waschwassers ermöglicht, indem er mithilfe der vom Verdampfer (5) aufgenommenen Wärme eine heiße Oberfläche erzeugt und einen Kompressor (7), der in Fluidverbindung mit dem Verdampfer (5) und dem Kondensator (6) steht und den Kältemittelkreislauf durchführt, mindestens eine Düse (8), die das Versprühen von Wasser in die Umgebung des Verdampfers (5) ermöglicht, um die Luftfeuchtigkeit um den Verdampfer (5) herum zu erhöhen, und eine Steuereinheit (9), die das Versprühen des Wassers durch die Düse (8) während des Betriebs des Verdampfers (5) ermöglicht, **gekennzeichnet ist es dadurch,** dass ein zweiter Auffangbehälter (11) vorgesehen ist, in dem das während des Trocknungsvorgangs kondensierte Wasser aufgefangen wird und durch die Steuereinheit (9) ermöglicht wird, dass das im zweiten Auffangbehälter (11) gesammelte Wasser durch die Düsen (8) versprüht wird.

2. Eine Geschirrspülmaschine (1), wie in Anspruch 1 aufgeführt, **ist dadurch gekennzeichnet, dass** eine Pumpe (13) die Förderung des Leitungswassers zu der Waschwanne (3) ermöglicht; dass eine Wasserleitung (14), die durch die Pumpe (13) verläuft und die Zufuhr des Wassers zu den Düsen (8) ermöglicht, und ein Ventil (15), das an der Wasserleitung (14) angeordnet ist, und die Steuereinheit (9), der die Wasserzufuhr zu den Düsen (8) durch Steuerung des Ventils (15) und der Pumpe (13) ermöglicht.

3. Eine Geschirrspülmaschine (1), wie in einem der vorherigen Ansprüchen aufgeführt, **ist dadurch gekennzeichnet, dass** mindestens ein Ventilator (16) das Anblasen der Umgebungsluft auf den Verdampfer (5) ermöglicht.

4. Eine Geschirrspülmaschine (1), wie in Anspruch 3 aufgeführt, **ist dadurch gekennzeichnet, dass** die Düsen (8) zwischen dem Verdampfer (5) und dem Ventilator (16) positioniert sind.

5. Eine Geschirrspülmaschine (1), wie in Anspruch 3 aufgeführt, **ist dadurch gekennzeichnet, dass** die Düsen (8) am Lufteinlass des Ventilators (16) positioniert sind.

6. Eine Geschirrspülmaschine (1), wie in einem der vorherigen Ansprüchen aufgeführt, **ist dadurch gekennzeichnet, dass** die Düsen (8) oberhalb des Verdampfers (5) positioniert sind.

7. Eine Geschirrspülmaschine (1), wie in einem der vorherigen Ansprüchen aufgeführt, **ist dadurch gekennzeichnet, dass** ein um den Kompressor (7) angeordneter Heizbehälter (17) eine Erwärmung des den Düsen (8) zugeführten Wassers ermöglicht.

## Revendications

1. Lave-vaisselle (1) **comprenant** un corps (2), une cuve de lavage (3) disposée dans le corps (2) et dans laquelle le processus de lavage est effectué ; et une pompe à chaleur (4) disposée dans le corps (2) et comportant au moins un évaporateur (5) pour absorber la chaleur ambiante en formant une surface froide, un condenseur (6) qui permet de chauffer l'eau de lavage en créant une surface chaude à l'aide de la chaleur absorbée par l'évaporateur (5) et un compresseur (7) qui est en communication fluidique avec l'évaporateur (5) et le condenseur (6) et qui exécute le cycle du réfrigérant, au moins une buse (8) qui permet de pulvériser de l'eau dans l'environnement de l'évaporateur (5) pour augmenter l'humidité de l'air autour de l'évaporateur (5), et une unité de commande (9) qui permet de pulvériser l'eau à travers la buse (8) pendant le fonctionnement de l'évaporateur (5) **caractérisé par** un second récipient de collecte (11) dans lequel l'eau qui se condense pendant le processus de séchage est collectée et par l'unité de commande (9) qui permet à l'eau collectée dans le second récipient de collecte (11) d'être pulvérisée par les buses (8).

2. Un lave-vaisselle (1) selon la Déclaration 1, **caractérisé par** une pompe (13) qui permet de transférer l'eau du réseau vers la cuve de lavage (3) ; une conduite d'eau (14) qui traverse la pompe (13) et permet d'alimenter en eau les buses (8), et une vanne (15) qui est disposée sur la conduite d'eau (14), et l'unité de commande (9) qui permet d'alimenter en eau les buses (8) en contrôlant la vanne (15) et la pompe (13).

3. Un lave-vaisselle (1) selon l'une quelconque des déclarations précédentes, **caractérisé par** au moins un ventilateur (16) permettant de souffler l'air ambiant sur l'évaporateur (5).

4. Un lave-vaisselle (1) selon la Déclaration 3, **caractérisé par** les buses (8) qui sont positionnées entre l'évaporateur (5) et le ventilateur (16).

5. Un lave-vaisselle (1) selon la Déclaration 3, **caractérisé par** les buses (8) qui sont positionnées à l'entrée d'air du ventilateur (16).

6. Un lave-vaisselle (1) selon l'une quelconque des déclarations précédentes, **caractérisé par** les buses (8) qui sont positionnées au-dessus de l'évaporateur (5).

7. Un lave-vaisselle (1) selon l'une quelconque des déclarations précédentes, **caractérisé par** un récipient chauffant (17) qui est disposé autour du compresseur (7) et qui permet de chauffer l'eau alimentant les buses (8).
